# EUROPÄISCHE PATENTANMELDUNG

(11) **EP 0 526 848 A2**
(43) Veröffentlichungstag der Anmeldung: **10.02.1993**
(21) Anmeldenummer: 92113082.9
(22) Anmeldetag: 01.08.1992
(51) Int. Cl.: B29C 67/20, B32B 31/12, B29C 67/22, B01D 67/00

(54) **Verfahren zur Herstellung von Matten, bestehend aus mindestens zwei miteinander verbundenen Lagen**

(30) Priorität: 07.08.1991 DE 4125828
(71) Anmelder: Akzo Nobel N.V., NL-6824 BM Arnhem (NL)
(72) Erfinder: Van Vliet, Arie Hendrik Frans, Dr., Arnhem (NL)
(74) Vertreter: Fett, Günter

(57) **Zusammenfassung**

Verfahren zur Herstellung von Matten, bestehend aus mindestens zwei, miteinander verbundenen Lagen, für technischen Einsatz, wobei eine erste Lage aus einem dreidimensionalen Gebilde mit einem Hohlraumanteil von mehr als 80% besteht, dadurch gekennzeichnet, daß zur Verbindung der Lagen und gegebenenfalls zur Herstellung der zweiten Lage Körner mit einem niedrigeren Schmelzbereich als der Schmelzbereich der ersten Lage und einem deutlich geringeren Querschnitt als die die erste Lage bildenden Hohlräume verwendet werden, daß die Körner als Schicht mit der ersten Lage in Kontakt gebracht werden und daß die Schicht mit einer Temperatur beaufschlagt wird, die höher als der Schmelzbereich der Körner und niedriger als der Schmelzbereich der ersten Lage ist, und daß die Verbindung der beiden Lagen und gegebenenfalls die Herstellung der zweiten Lage durch Abkühlung der Schmelze erfolgt.

## Beschreibung

Die Erfindung betrifft ein Verfahren zur Herstellung von Matten, bestehend aus mindestens zwei, miteinander verbundenen Lagen, für technischen Einsatz, wobei eine erste Lage aus einem dreidimensionalen Gebilde mit einem Hohlraumanteil von mehr als 80% besteht.

Derartige Matten sind vielfach bekannt und haben ein breites Einsatzgebiet. Sie werden beispielsweise als Drainageelemente eingesetzt, wobei durch das innenliegende dreidimensionale Gebilde, welches ein- oder beidseitig mit Vliesen oder Folien abgeschlossen ist, Wasser abfließen kann. Die Matten werden aber auch zur Herstellung von Sandwich-Strukturen verwendet, wobei das dreidimensionale Gebilde mit einem hohen Hohlraumanteil ausgeschäumt wird und die außenliegenden flächigen Lagen die Oberfläche der Sandwichstruktur bildet. Die Matten können aber auch als Verpackungsmaterial für stoßempfindliche Gegenstände Verwendung finden.

Bei allen Einsatzzwecken ist es wichtig, daß das dreidimensionale Gebilde mit hohem Hohlraumanteil gut mit den anderen Lagen verbunden ist. Dies wurde bisher beispielsweise durch zusätzlichen Kleber erreicht, wobei bisher keine besonders guten Verbindungen erreicht werden konnten, oder durch punktförmige Verschweißung, wodurch durch den hohen Hohlraumanteil des dreidimensionalen Gebildes häufig das dreidimensionale Gebilde an der Verbindungsstelle zur zweiten Lage derart geschwächt war, daß schon bei leichter Belastung die Verbindungsstelle aufgebrochen ist.

Aufgabe der vorliegenden Erfindung ist es, ein Verfahren zur Herstellung derartiger Matten zur Verfügung zu stellen, über welches eine haltbare Verbindung der Lagen erreicht wird.

Diese Aufgabe wird erfindungsgemäß dadurch gelöst, daß zur Verbindung der Lagen und gegebenenfalls zur Herstellung der zweiten Lage Körner mit einem niedrigeren Schmelzbereich als der Schmelzbereich der ersten Lage und einem deutlich geringeren Querschnitt als die die erste Lage bildeten Hohlräume verwendet werden, daß die Körner als Schicht mit der ersten Lage in Kontakt gebracht werden, daß die Schicht mit einer Temperatur beaufschlagt wird, die höher als der Schmelzbereich der Körner und niedriger als der Schmelzbereich der ersten Lage ist, und daß die Verbindung der beiden Lagen und gegebenenfalls die Herstellung der zweiten Lage durch Abkühlung der Schmelze erfolgt.

Auf diese Weise kann erreicht werden, daß über die aus den Körnern hergestellte Schmelze nach dem Erkalten eine sichere Verbindung zwischen dem dreidimensionalen Gebilde mit hohem Hohlraumanteil und der zweiten Lage, die gegebenenfalls ebenfalls durch Erstarrung der aus den Körnern hergestellten Schmelze hergestellt wurde, erreicht werden. Geeignete Polymere als Werkstoff für die Körner sind Polyethylen oder Polypropylen.

Als dreidimensionale Gebilde mit einem Hohlraumanteil von mehr als 80% kommen vielfältige Gebilde in Frage. Das dreidimensionale Gebilde kann beispielsweise als aus der Ebene verformtes Flächengebilde, wie beispielsweise Folien, Vliese, Gewebe oder Gitter, ausgebildet sein. Die Gebilde können eine Berg- und Tal-Struktur in einer Richtung (Wellenstruktur) oder in beiden Richtungen (Waffelstruktur) aufweisen. Das dreidimensionale Gebilde kann auch aus dreidimensional angeordneten, sich stellenweise überkreuzenden Fäden und/oder Streifen bestehen, wobei an den Kreuzungsstellen die Fäden und/oder Streifen miteinander verbunden sind. Auch Gebilde, die durch mehrfaches, gleichmäßiges Einschneiden einer Folie und anschließendes Recken entstanden sind (bei Metallblechen unter der Bezeichnung Streckmetall bekannt) eignen sich als dreidimensionale Gebilde mit hohem Hohlraumanteil.

Das erfindungsgemäße Verfahren kann auf verschiedene Weise bewerkstelligt werden. Es kann beispielsweise zunächst das dreidimensionale Gebilde mit einem hohen Hohlraumenteil ausgelegt und die Körner derart eingestreut werden, daß sie im unteren Bereich eine Schicht bilden. Hierzu kann es erforderlich sein, daß das dreidimensionale Gebilde mit hohem Hohlraumanteil einer Rüttelbewegung unterzogen wird.

Ebenfalls ist es möglich, eine zweite Lage zu unterlegen oder - wenn die zweite Lage aus den Körnern hergestellt werden soll - eine inerte Unterlage zur Durchführung des erfindungsgemäßen Verfahrens vorzusehen.

Anstatt Körner kann auch Pulver verwendet werden. Bei Verwendung von Pulver ergibt sich der Vorteil, daß Pulver aufgrund seiner Eigenschaft, sich ähnlich wie viskose-Flüssigkeiten zu verhalten, leichter in eine ebene, gleichmäßige Schicht zu bringen ist als Körner.

Folgende Werkstoff-Kombinationen haben sich als sehr vorteilhaft erwiesen und werden beispielshalber genannt:

| Unterlage | Körner/Pulver | Erste Lage |
|---|---|---|
| HDPE | HDPE | PET |
| LDPE | LDPE | PA |
| EVA | EVA | PP |

Es können jedoch auch andere Werkstoffkombinationen gewählt werden, so wie es auch möglich ist, Gemische aus den genannten Werkstoffen (Polymeren) zu verwenden.

Die erfindungsgemäß hergestellten Matten lassen sich insbesondere beispielsweise zu Schmutzfängern verarbeiten, wie sie an Personen- und Lastkraftwagen Verwendung finden. Solche Schmutzfänger können in den Kotflügeln in Art einer Auskleidung (ggf. Teilauskleidung) und/oder hinter den Rädern an den Kotflügeln und von diesen herunterhängend angeordnet werden.

## Patentansprüche

1. Verfahren zur Herstellung von Matten, bestehend aus mindestens zwei, miteinander verbundenen Lagen, für technischen Einsatz, wobei eine erste Lage aus einem dreidimensionalen Gebilde mit einem Hohlraumanteil von mehr als 80% besteht, dadurch gekennzeichnet, daß zur Verbindung der Lagen und gegebenenfalls zur Herstellung der zweiten Lage Körner mit einem niedrigeren Schmelzbereich als der Schmelzbereich der ersten Lage und einem deutlich geringeren Querschnitt als die die erste Lage bildenden Hohlräume verwendet werden, daß die Körner als Schicht mit der ersten Lage in Kontakt gebracht werden und daß die Schicht mit einer Temperatur beaufschlagt wird, die höher als der Schmelzbereich der Körner und niedriger als der Schmelzbereich der ersten Lage ist, und daß die Verbindung der beiden Lagen und gegebenenfalls die Herstellung der zweiten Lage durch Abkühlung der Schmelze erfolgt.

2. Verfahren nach Anspruch 1, dadurchgekennzeichnet, daß die Körner auf eine inerte Unterlage als dünne Schicht gestreut werden, die erste Lage in diese Schicht eingedrückt wird, die Körnerschicht zum Schmelzen gebracht wird, daß durch Abkühlen der Schmelze die zweite Lage und die Verbindung zwischen erster und zweiter Lage entsteht, und daß dann das Zweilagengebilde von der inerten Unterlage entfernt wird.

3. Verfahren nach Anspruch 1, dadurch gekennzeichnet, daß die erste Lage auf eine inerte Unterlage aufgelegt wird, die Körner in die erste Schicht derart eingestreut werden, daß sie auf der inerten Unterlage eine in etwa gleichmäßige Schicht bilden, daß die Körnerschicht zum Schmelzen gebracht wird, daS durch Abkühlen der Schmelze die zweite Lage und die Verbindung zwischen erster und zweiter Lage entsteht, und daß dann das Zweilagengebilde von der inerten Unterlage entfernt wird.

4. Verfahren nach Anspruch 1, dadurch gekennzeichnet, daß als zweite Schicht eine flächige Unterlage in Form eines Vlieses oder einer Folie verwendet wird, welche einen höheren Schmelzbereich als die Körner aufweist, daß die erste Lage auf die flächige Unterlage aufgelegt wird, daß die Körner in die erste Schicht derart eingestreut werden, daß sie auf der flächigen Unterlage eine in etwa gleichmäßige Schicht bilden, daß die Körnerschicht zum Schmelzen gebracht wird, und daß durch Abkühlen der Schmelze die Verbindung zwischen erster und zweiter Lage entsteht.

5. Verfahren nach einem oder mehreren der vorangehenden Ansprüche, dadurch gekennzeichnet, daß anstatt Körnern Pulver verwendet wird.
